# EUROPEAN PATENT SPECIFICATION

(11) **EP 2 346 791 B1**
(45) Date of publication and mention of the grant of the patent: **04.09.2019**
(21) Application number: 09744770.0
(22) Date of filing: 27.10.2009
(51) Int. Cl.: C03C 17/34, G02B 1/11, G02C 7/02, G02B 1/12

(54) **METHOD FOR MARKING COATED OPHTHALMIC SUBSTRATES**
VERFAHREN ZUR MARKIERUNG BESCHICHTETEN OPHTALMISCHEN SUBSTRATEN
MÉTHODE POUR LE MARQUAGE DE SUBSTRATS OPHTALMIQUES REVÊTUS

(30) Priority: 28.10.2008 US 259822
(43) Date of publication of application: 27.07.2011
(73) Proprietor: Essilor International, 94220 Charenton-le-Pont (FR)
(72) Inventor: EAGERTON, William, Lewisville Texas 75067 (US)
(74) Representative: Santarelli
(86) International application number: PCT/IB2009/054745
(87) International publication number: WO 2010/049887

(56) References cited:
- WO-A1-01/55752
- WO-A2-2008/001011
- FR-A1- 2 847 346
- US-B1- 6 281 468

## Description

### Background of the invention

### 1. Field of the invention

The present invention relates to the marking of ophthalmic substrates or blank lenses, for the purpose of identifying the manufacturer, origin, characteristics or references of the ultimate lens. Such marking is also referred to as "monogramming". The present invention more particularly relates to a method of marking coated ophthalmic lenses and specifically coated ophthalmic substrates or blank lenses having one more electrically conductive layers such as used for conferring anti-static properties.

### 2. Description of prior art

There are a wide variety of methods of marking ophthalmic lenses. Some involve the selective removal of the ophthalmic lens material and/or coatings thereon, namely by mechanical engraving and chemical etching and by means of lasers and in particular excimer lasers. Such markings are generally visible to the naked eye with or without special lighting conditions and are objectionable to eyeglass wearers for that reason.

Other kinds of markings are normally invisible but can been rendered visible by fogging or misting the lens, in practice, simply by exhaling against the lens to produce a thin layer of condensation. Essentially such methods involve the change in the surface characteristics of the lenses. Some known coatings have high surface energies such as anti-reflective or anti-reflection coatings. Others, such as top coats, are used as anti-smudge or anti-fouling coatings to avoid oily or greasy smudges and grime collecting on the lens have low surface energies. The anti-reflective and top coats are conventionally applied by vacuum deposition in an electron beam or e-beam evaporator, also known as a box coater. The various layers of the anti-reflection coating are optical layers which may be deposited under vacuum by one of the following techniques: i) evaporation, preferably ion assisted deposition or IAD evaporation, ii) ion beam sputtering, iii) magnetron sputtering, and iv) plasma assisted vapor phase chemical deposition. Typically the high or low surface energy material is selectively physically or chemically modified and removed to the desired configuration of the marking or indicia. Fogging reveals the low surface energy parts as light toned micro-droplets and the high surface energy parts as darker toned larger droplets or condensate film.

U.S. patent 6,281,468 assigned to the assignee of the present application discloses a method for providing a high surface energy marking of an ophthalmic lens surface having a low surface energy which is rendered visible by fogging. The surface energizing method employs a surface energizing source and preferably a corona discharge source, means for applying a mask on a surface of an ophthalmic lens to be marked, the mask defining zone corresponding to a desired marking and being interposed between the surface energizing source and the surface of the lens to be marked, the corona discharge increasing the surface energy of the surface to be marked so as to render the resulting marking visible by fogging or misting.

Typically the outer coating of the face or surface of the lens blank or substrate to be marked has a low surface energy, such as defined by a hydrophobic and/or oleophobic anti-smudge top coat, such as a CRIZAL® top coat of the assignee of the present application. The low surface energy top coat is, for example, provided on the convex front face of the lens. The bulk ophthalmic lens blank material may be any suitable organic glass, e.g. a hard resin, in particular polycarbonate or allyl diglycol carbonate such as the copolymer of bis allyl diethyleneglycol carbonate sold under the trademark CR 39® and available from PPG, or mineral glass. Typically, an impact resistant coating (or an impact resistant primer) and a high surface energy hard coat are applied in succession for protecting the bulk material from impacts, abrasion or scratching, as is known per se. A high surface energy anti-reflective or anti-reflection coating is applied to the hard coat, also known per se.

The corona discharge causes electron avalanching. The resulting high energy discharge is capable of breaking the molecular bonds, e.g. of a hydrophobic top coat, to increase the surface energy of the material or selectively disintegrate the coat through cut-outs in the mask, in which case it reveals portions of the subjacent, higher surface energy coat or bulk material.

The mask may be part of a flexible screen, e.g., a Mylar® film which is impermeable to the surface energizing discharge and has a cut-out or cut-outs corresponding to the desired marking(s). The mask part of the screen mates with the lens blank surface in particular the convex surface to be marked when the lens is pressed against the screen held taut.

Alternatively the mask may comprise an ink mask stamped on the surface of the lens blank to be marked. The mask is impermeable to the surface energizing discharge. After treatment, the ink mask on the lens is removed, e.g. with a suitable solvent.

While the corona discharge source is preferred other energizing sources are disclosed such as ultraviolet radiation sources, glow discharge sources or low temperature plasma sources are contemplated.

Such a method has been industrially exploited and gives good results.

Edging of the lens blank is conventionally carried out in a grinding machine. The lens is axially clamped between holding members of a chuck. A double-sided adhesive pad is disposed between the convex face of the lens blank and the holding member and an elastomeric pad is interposed between a convex holding member and the concave face of the lens blank. During edging if the lens blank is not properly clamped in the chuck between the holding members tangential cutting forces may cause de-centering of the lens blank relative to the axis of the holding members, resulting in the rejection of the improperly edged lens. Hydrophobic and/or oleophobic anti-smudge or anti-fouling coatings, typically fluorosilane type coatings, have become so effective that the adherence at the interface between the double-sided adhesive retaining pad and the convex surface of the lens is compromised, causing a de-centering of the lens particularly when edging polycarbonate lens which requires high torque and resulting in the rejection of lenses which are not correctly edged.

U.S. patent application 2006/0051501 assigned to the assignee of the present application discloses an adherence surface in the form of a temporary protection layer which is applied over the anti-smudge top coat conferring a high surface energy to the outer surface of the lens blank to enable edging of the lens blank without any problem of de-centering. The temporary protection layer is preferably a mineral layer and more particularly a layer of a metal fluoride, a mixture of metal fluorides, a metal oxide or a mixture of metal oxides, for example magnesium fluoride (MgF2), lanthanum fluoride (LaF3), aluminium fluoride (AlF3) or cerium fluoride (CeF3) mixtures of alumina and praseodymium oxide. Such a protection layer may be deposited by any conventional method, but preferably by vacuum deposition in a box coater as is the case of the anti-reflective coatings and hydrophobic and/or oleophobic anti-smudge coatings.

Such protection layers were conventionally between about 5 nm and 10µm thick and when deposited by evaporation preferably from 5 to 200 nm. Such a temporary layer was too thick to permit the corona discharge treatment of the top coat through the temporary layer.

According to the method disclosed in U.S. patent publication 2006/0051501 the temporary protection coat was made less than about 5 nm thick, preferably 2 to 4 nm thick and more preferably less than 2 nm thick so that the corona discharge treatment of the lens blank could be carried out after the application of the temporary protection layer and the temporary protection layer applied on the top coat without having to remove the lens blank from the box coater for corona discharge treatment and then return it to the box coater. Such a temporary protection layer may be eliminated after the edging of the lens by dry wiping with a suitable cloth, or by acid solution or ultrasound.

It is well known that ophthalmic substrates and lens blanks for eyeglasses have a tendency to pick up an electrostatic charge particularly when they are wiped or cleaned and dried by rubbing with a suitable cloth or the like. When an ophthalmic lens is electrostatically charged it has the tendency to attract and attach small particles, e.g., of dust, which cling to the lens as long as it remains electrostatically charged. It is known to provide an anti-static coating to dissipate the electrostatic charge as disclosed in PCT patent application WO 01/55752 and PCT application WO 2008/001011, the latter in the name of the assignee of the present application.

As disclosed in these PCT applications the ophthalmic lens is rendered anti-static or anti-static resistant by incorporating at least one electrically conductive layer in a stack of anti-reflective layers. The electrically conductive layer may be at any of various locations provided it does not interfere with the anti-reflection characteristics.

The electrically conductive layer is sufficiently thin so as not to affect the transparency of the anti-reflective coating, and generally ranges between 0.1 and 150 nm or preferably between 0.1 and 50 nm depending on the nature of the electrically conductive layer. The electrically conductive layer is preferably both electrically conductive and highly transparent in which case the thickness varies preferably between 0.1 and 30 nm, or preferably between 1 and 20 nm or even more preferably between 1 and 10 nm. The electrically conductive material is preferably a metal oxide selected from indium, tin and zinc oxides and mixtures thereof. Indium tin oxide (In2O3;Sn) which is a tin-doped indium oxide and tin oxide are preferred. According to a preferred embodiment the electrically conductive, optically transparent layer is an indium-doped tin oxide, known as ITO.

The electrically conductive layer generally contributes to the anti-reflective properties of the lens and may comprise a high refractive index layer of the anti-reflective coating. Such is the case when a highly transparent electrically conductive layer or layers of ITO are employed.

Alternatively the electrically conductive layer may be a very thin layer of a noble metal, typically less than 1 nm, and preferably less than 0.5 nm.

In a preferred embodiment the anti-reflective coating comprises a plurality of dielectric layers and one or more electrically conductive layer conferring the anti-static property to the coated lens.

According to a preferred embodiment an ophthalmic lens blank or substrate of mineral or organic glass such as polycarbonate or the copolymer of bis allyl diethyleneglycol carbonate is provided with an anti-reflective coating including a SiO2 under layer having a thickness equal to or greater than 75 nm, a first high index layer of ZrO2 generally having a thickness of 10 to 40 nm and preferably 15 to 35 nm, a first low index layer of SiO2/Al2O3 (a mixture of SiO2 and Al2O3 preferably 1 to 10 wt% Al2O3) generally having a thickness of 10 to 40 nm and preferably 15 to 35 nm, a second high index layer of TiO2 generally having a 40 to 150 nm thickness, and preferably 50 to 120 nm thick, and a third high index layer of ZrO2, generally having a thickness of 10 to 30 nm and preferably 10 to 25 nm thick and an electrically conductive layer, preferably a fourth high index electrically conductive layer of ITO, generally have a thickness of 0.1 to 30 nm and preferably 1 to 20 nm, a second low index layer of SiO2/Al2O3 generally having a thickness of 40 to 150 nm and preferably 50 to 100 nm. In a further preferred embodiment the anti-reflective stack include SiO2/ZrO2/ an electrically conductive layer namely of ITO.

In a particularly preferred embodiment the bulk substrate has an anti-reflective coating comprising the following successive depositions: an under layer of SiO2having a thickness greater than or equal to 120 nm, a high index layer of ZrO2 having a thickness of 20 to 30 nm, a low index SiO2/Al2O3 layer 20-30 nm thick, a high index TiO2 layer 75 to 105 nm thick, a high index layer of ZrO2 10-20 nm thick, a high index electrically conductive layer of ITO 2 to 20 nm thick, and a low index SiO2/Al2O3 layer 60-90 nm thick.

Also, prior to depositing coating layers on the bulk material of the ophthalmic substrate or lens blank, the ophthalmic substrate is treated under vacuum conditions by ion bombardment of energetic species for example an ion beam, better known as ion pre-cleaning or IPC. Such ion pre-cleaning ensures that the substrate surface is optimally clean.

The under layer and the various layers of the anti-reflection coating are preferably deposited under vacuum by one of the enumerated techniques noted above. The electrically conductive layer may be deposited by any appropriate technique, for example by evaporation under vacuum, preferably ion assisted deposition or magnetron sputtering or ion beam deposition.

As noted above, the under coat may be deposited directly on the substrate material, but in certain applications it is preferable to have the main surface of the substrate coated with an anti-abrasion and/or anti-scratch layer, an anti-impact primary layer or an anti-impact primary layer and an anti-abrasion and/or anti-scratch layer in that order. The anti-impact primary layer and the anti-abrasion or anti-scratch layer are typically applied by dip coating or spin coating as is well known in the art, (see Physical film formation, C. Jeffrey Brinker and George W. Scherer, The Physics and Chemistry of Sol-Gel Processing, Academic Press, pp. 788-789 and 795-797).

Other conventional layers or coatings may also be employed.

The under layer and the anti-reflection coating are preferably deposited on the anti-abrasion and/or anti-scratch coating. The anti-abrasion and/or anti-scratch layer may be any layer conventionally used as an anti-abrasion and/or anti-scratch coating in the ophthalmic lens field.

The abrasion and/or scratch resistant coatings are hard coats and are preferably poly(meth)acrylate or silane based hard coats.

The anti-abrasion and/or anti-scratch hard coats are preferably prepared from composition containing at least one alcosilane and/or alcosilane hydrolysat obtained for example by hydrolysis of a hydrochloric acid solution.

Among the recommended coatings are epoxysilane hydrolysats such as disclosed in European patent application No. 0614957, U.S. patents Nos. 4,211,823 and 5,015,523.

The preferred anti-abrasion and/or anti-scratch composition is preferably the one disclosed in French patent application 2 702 486 assigned to the assignee of the present application.

Such an ophthalmic lens preferably has a coating formed on top of the anti-reflection coating which is adapted to modify the surface properties of the lens and specifically a hydrophobic and/or oleophobic anti-smudge or anti-fouling top coat which are typically deposited by physical vapor deposition (PVD) on the anti-reflection coating and generally has a thickness less than or equal to 10 nm, and preferably from 1 to 10 nm, and more preferably between 1 and 5 nm.

Generally the top coat will be of the fluorosilane or fluorosilazane type. They may be deposited by means of a fluorosilane or fluorosilazane precursor comprising preferably at least two water soluable groups per molecule. The fluorosilane precursors preferably contain fluoropolyethers and preferably fluoropolyether groups. Such fluorosilanes are well know and disclosed inter alia in U.S. patents Nos. 5,081,192, 5,763,061, 6,183,872, 5,739,639, 5,922,787, 6,337,235, 6,277,485, and European patent application 0 933 377.

Typically such an ophthalmic lens will have a substrate coated successively with an anti-impact primary layer, an anti-abrasion and/or anti-scratch layer or hard coat, an under layer, an anti-reflection coating and a hydrophobic and/or oleophobic anti-smudge or anti-fouling coating.

The deposition process may comprise the steps of introducing the ophthalmic substrate or lens blank into a hard-coating machine to be processed with an anti-impact primary layer and an anti-abrasion and/or anti-scratch layer, or hard coat, applied by dip coating or spin coating as well known per se. Thereafter, the ophthalmic substrate is introduced into a vacuum deposition chamber or enclosure pumping down the enclosure to a pressure about 2x10-5 mbar, ion pre-cleaning the lens blank at that pressure also depositing a low index under layer of SiO2or SiO2/Al2O3 which is optional and an anti-reflection coating comprising depositing a first high index layer of ZrO2 for example at a rate of 0.3 nm/s, depositing a first low index layer SiO2 or SiO2/Al2O3 for example at a rate of 0.7 nm/s, depositing a second high index layer of TiO2 for example at a pressure of 1X10-4 mbar at a rate of 0.3 to 0.5 nm/s with oxygen ion assistance , depositing the third high index layer of ZrO2 for example at a rate of 0.3 nm/s, depositing an ITO electrically conductive high index layer for example at a rate of 0.3 to 0.5 nm/s and corresponding oxygen ion assistance at 2.5 A and 120V, depositing a second low index layer of SlO2 or SiO2/AlO3 for example at a rate of 1 nm/s and depositing an anti-smudge or anti-fouling top coat and ventilating the enclosure before removing the coated lenses or other coated substrates or lens blanks from the enclosure.

The methods and apparatus disclosed in U.S. patent 6,281,468 and U.S. patent publication 2006/0051501 have been employed for marking the ophthalmic lenses or other optical articles having various hard coats, antireflection coats and top coats with success. A problem has arisen in employing such methods and apparatus when the coatings include an electrically conductive layer such as in the case where an electrically conductive layer is used to give the lens improved anti-static properties.

French patent application FR 2 859 485 discloses a method for applying an antireflection treatment to an optical substrate, comprising depositing by physical vapor-phase deposition in a vacuum a low index layer having a low refractive index and including a fluorinated polymer.

### Summary of the Invention

The applicants have discovered that when a corona discharge is used to selectively remove an anti-smudge or anti-fouling top coat or some other lower energy coating from a lens blank having a conductive layer, the conductive layer interacts with the corona discharge and thereby interferes with the "etching" effect of the corona discharge resulting in an unsatisfactory marking of the lens.

An object of the invention is to provide a method for the selective removal of the outer surface of a lens to define a marking rendered visible by fogging or misting which may be used with an ophthalmic substrate or lens blank having one or more electrically conductive layers such as those used for improved anti-static properties.

According to the invention there is provided a method for marking an ophthalmic lens or other optical article comprising the steps of:
- providing an ophthalmic substrate or lens blank of suitable organic or mineral glass having opposed optical surfaces;
- depositing a plurality of layers to define coatings on one or both of the opposed optical surfaces with anti-impact, anti-scratch or anti-abrasion, anti-reflection and/or anti-smudge properties, at least one of the layers being an electrically conductive layer;

- providing a mask defining a configuration complementary to the desired marking of the one of the surface of the coated ophthalmic substrate and positioning the mask in the immediate proximity of the substrate or lens blank surface; and
- providing an ion source and directing the ion beam produced by the ion source at the masked surface of the ophthalmic substrate to remove at least a portion of the outermost of said coating layers exposed through the mask thereby producing a desired marking rendered visible by fogging.

The depositing step may include depositing a plurality of high and low index layers to define an anti-reflection coating where the conductive layer comprises one or more of the high index layers and has anti-static properties.

The conductive layer defining one or more of the high index layers of the anti-reflection coating may be a layer of indium tin oxide (ITO).

The depositing step may include deposition a plurality of high and low index layers defining an anti-reflection coating in which high index layers are all conductive layers and confer anti-static properties on the ophthalmic substrate.

High and low index layers defining the anti-reflection coating are layers which may be deposited by ion assisted deposition.

The ophthalmic substrate may be subjected to ion pre-cleaning (IPC) in a vacuum chamber prior to the deposition of the coating layers, and at least some of the coating layers including the one or more conductive layers are deposited on the ion pre-cleaned ophthalmic substrate by ion assisted deposition in the vacuum enclosure.

The surface to be marked may be the convex surface of the coated ophthalmic substrate, and the ion source is mounted in a vacuum enclosure facing a carousel support for concomitantly exposing a plurality of coated ophthalmic substrates mounted in the carousel support.

The mask may be a relatively rigid piano type lens transparent template made of an ion-beam impermeable material with one or more cut-outs corresponding to the desired marking(s) for exposing the corresponding portion of the coated ophthalmic substrate to the ion beam, the template having a back curvature matching the base curvature of a convex surface of the coated ophthalmic substrate to be marked.

A plurality of ophthalmic substrates all having the same back curvatures may receive corresponding rigid piano type lens templates with one or more cut-outs corresponding to the desired marking(s) and having a back curvature matching the base curvature of the convex surface of the coated ophthalmic substrate to be treated with an ion beam from an ion source. A plurality of ophthalmic substrates to be marked may be mounted in pairs in the openings of a carousel support or holder together with the respective piano lens template, the concave surface of the template being in intimate overlying relation with the convex surface of the ophthalmic substrate to be marked at the location of the cut-outs in the template so that the entire plurality of ophthalmic substrates may be treated with the ion source concomitantly.

The mask may alternatively be a "soft" or flexible polycarbonate template laser-etched with one or more cut-outs corresponding to the desired marking(s) so that the back side of the template may be aligned and brought into intimate contact with the convex surface of the ophthalmic substrates to be marked having a given range of different base curvatures.

Alternatively, the mask may be made of a metal foil with one or more cut-outs stamped therein and wrapped over the convex surface of an ophthalmic substrate, e.g. of the kind having a customized configuration to be treated with the ion beam from the ion source. The mask could also be made of a plastic film which is applied to the convex surface of the ophthalmic substrate and is suitable for protecting the masked portion of the ophthalmic substrate from the ion beam such as a Kapton® polyimide film available from DuPont, and in particular a Kapton® CR polyimide film.

The ion source discharge operating parameters correspond to operating parameters of an ion source used for ion pre-cleaning (IPC) of optical articles.

The method may further comprise depositing in addition to the aforesaid coating layer or layers a temporary protecting layer for increasing the surface energy of the ophthalmic surface to facilitate edging. In this case appropriate areas of the temporary protective film are selectively removed prior to bombardment with the ion beam so that the ion beam reaches the outermost coating layer through the cut-out(s) in the mask to modify the surface energy of the outermost coating layer. Selective removal of the temporary protection layer may be effected by automatically or manually controlled rotating brushing or buffing, or even by means of ultrasound.

These and other features advantages of the present invention will be brought out in the following description of embodiments of the invention given by way of example with reference to the appended drawings.

### Brief Description of the Drawings

Fig. 1 is a front view of an ophthalmic substrate or lens blank with a marking which is rendered visible by fogging;
Fig. 2 shows an enlarged and exploded side view of an ophthalmic substrate to illustrate an example of various coatings, on the convex side of an ophthalmic substrate to be marked with an ion source;

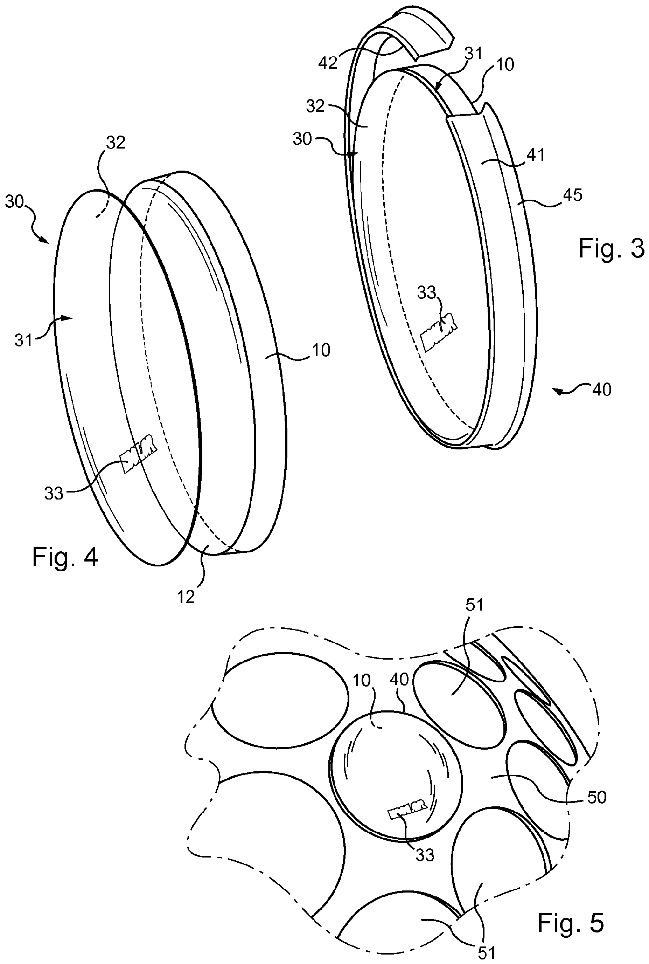

Fig. 3 is a perspective view of an ophthalmic substrate and a template defining a mask being clipped together with a mounting ring;
Fig. 4 is a perspective view of an ophthalmic substrate with a template spaced axially from each other;
Fig. 5 is a perspective view of part of a domed carousel support with openings each receiving substrate and a masking template clipped together;
Fig. 6 is front view of embodiment of a foil mask having a stamped cut-out and wrapped on the convex surface of a coated ophthalmic lens blank;
Fig. 7 is a sectional view of the embodiment of Fig. 6;
Fig. 8 is a schematic illustration of a vacuum chamber or enclosure equipped with an ion source for "etching" or marking a coated ophthalmic substrate having one or more electrically conductive layers according to the present invention; and

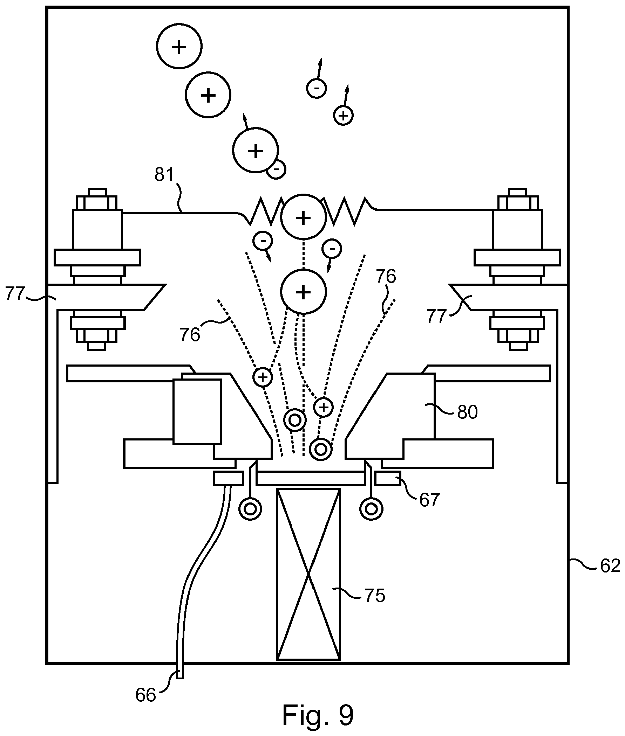

Fig. 9 is a schematic showing of the operation of an ion gun and in particular an end-Hall ion gun for use in "etching" or marking coated ophthalmic substrates according to the present invention.

### Detailed Description of Embodiments of the Invention

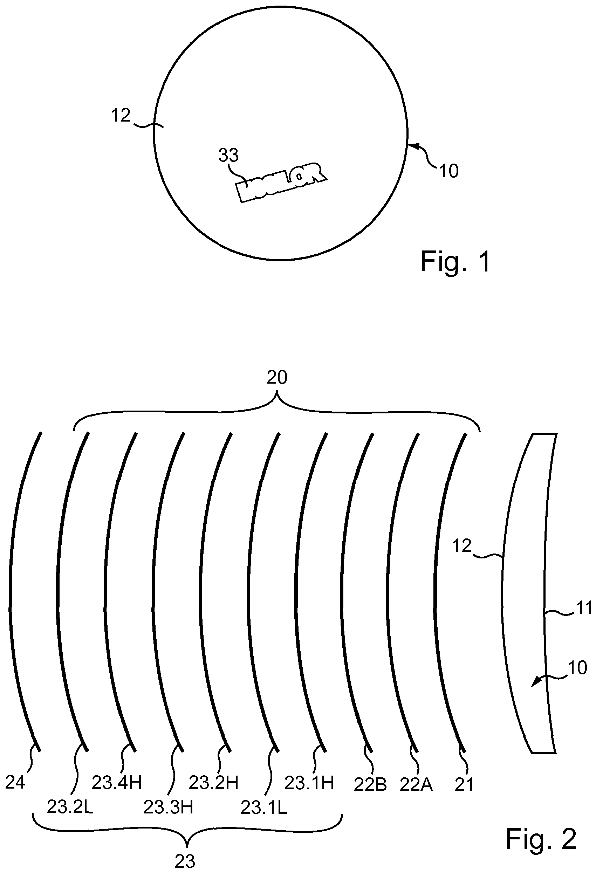

Figs. 1 and 2 show an coated ophthalmic or lens blank 10 made of organic glass such as polycarbonate or a copolymer of bis allyl diethylenegycol carbonate, for example an ORMA® lens blank available from the assignee of the present application, or mineral glass having at least one coating layer 20 in practice a plurality of layers such as illustrated by way of example, specifically, an impact resistant layer or hard coat 21, a scratch resistant or anti-scratch, and/or an anti-abrasion coating layer 22A, and an under coat 22B of SiO2,an anti-reflection coating 23 comprising for example six layers including high index layers 23.1H, 23.2H, 23.3H, 23.4H and low index layers 23.1L, 23.2L and an anti-smudge or anti-fouling top coat 24. One or more of the coating layers is made of electrically conductive material. In the present embodiment one or more of the anti-reflective layers of the anti-reflection coating are made of electrically conductive material and in particular one or more of the high index layers 23.1H, 23.2H, 23.3H, 23.4H of the anti-reflective coating 23. As illustrated by way of example the anti-reflection coating comprises in succession from the under layer the following high and low coating layers, first high index layer 23.1H, first low index layer 23.1L, second high index layer 23.2H, third high index layer 23.3.H, fourth high index layer 23.4H and second low index layer 23.2L, the fourth high index layer 2.34H being an electrically conductive layer. Examples of the composition and thickness of such high and low layers are given above. The electrically conductive layer is preferably made of indium-doped tin oxide (ITO) as is known in the art or alternatively of a noble metal. The thickness of such a conductive layer when made of ITO may range from about 1 nm to about 20 nm.

Before coating the ophthalmic blank it is preferably subjected to ion pre-cleaning (IPC) in a vacuum enclosure or chamber by means of an end-Hall ion gun to ensure that the surface or surfaces to be coated are optimally clean so that the coating layers may be deposited under the best conditions. The impact resistant layer or hard coat 21, the scratch resistant or anti-scratch, and/or the anti-abrasion coating layer 22A may be applied by dip coating or spin coating. The optional under coat and the anti-reflection coating layers may be deposited on one or both surfaces of the ophthalmic substrates by any conventional deposition method known in the art. Alternatively, a stack of such coatings may be prepared on a transfer sheet and transferred to one of the surfaces of the ophthalmic substrate as disclosed in U.S. patent 6,562,466.

In addition to the coating layers which are intended to be permanently applied to the ophthalmic substrate a temporary protection layer 25 may be employed for ensuring adherence between the lens and a chuck or hold member to prevent de-centering of the substrate relative to the chuck axis during edging of the substrate to the contour of a given eyeglass frame, such as disclosed in U.S. patent publication 2006/0051501. The protection layer is of suitable thickness to ensure the protection of the immediately underlying coating layer, in this case the top coat 24. It is noted that such a temporary protection layer 25 is optional and may be eliminated where adherence of the outer most coating layer, e.g. the top coat 24, with the retaining pad of the chuck is high enough to prevent unacceptable de-centering of the substrate or angular movement of the substrate relative to the chuck.

In order to define the marking(s) on at least one of the surfaces 11,12 of the ophthalmic substrate 10, and in practice the convex surface 12, an ion-beam impermeable mask 30 is provided and comprises one or more suitable cut-outs 33 corresponding to the desired marking(s) permeable to the ion beam produced by the ion gun. Masks for this purpose are disclosed in U.S. patent No 6,281,468 and U.S. patent publication 2006/0051501 may be used for marking the ophthalmic blank of the present invention but other types of mask are preferred. Specifically the masks disclosed herein may be individually positioned and secured on respective ophthalmic substrates and removed after "etching" with an ion beam.

According to one embodiment the mask 30 comprises a substantially rigid piano type lens template 31 made of a preferably transparent hard resin such as PMMA and having a concave or back surface 32 which has a curvature which is substantially identical to the base curve of the convex front surface 12 of the ophthalmic substrate 10 to be marked. The base curve of the substrate is the nominal spherical surface thereof. Such a template 31 may have a thickness of about 2 mm to ensure its relative rigidity and is suitable for mass manufacturing where the template concave surface corresponds to the common base curve of the convex surface of a series of ophthalmic blanks having variety of different back or concave optical surfaces. One such template will be used for single vision lenses. But another template will be required for progression addition lens (PAL) substrates having the same convex surface base curve but incorporating a given progressive addition.

The template 31 may be positioned relative to the coated ophthalmic lens blank 10 with the concave back surface 32 of the template in substantially mating contact with the convex surface 12 of the ophthalmic blank and maintained in such position by means of an open or C-ring 40. Such a C-ring is made of a resilient material suitable for use in an ion beam environment and in particular stainless steel and has a cylindrical wall 41 and a first rim or flange 42 extending inwardly from the one edge of the cylindrical wall and second rim 43 extending outwardly from the opposite edge of the cylindrical wall 41. In its rest position the C-ring free ends 45 may not be only circumferentially spaced but also axially spaced. The C-ring has some form memory which allows it to "clamp" itself around the peripheries of the template and the coated lens blank which are positioned on top of each other. In order to clip the lens blank and the template snugly together the ring has a diameter smaller that the diameter of the template and lens blank (typically 65 mm). The template 31 and the blank 10 are introduced into the C-ring which is resiliently expanded to a larger diameter and when the C-ring is released it snugly clamps around the peripheries of the template and lens blank to hold them into place with their axes aligned and the cut-out portion of the template in position at the location of the convex surface 12 to be marked. The transparency of the template facilitates good positioning of the template cut-outs relative to the lens blank. Such a template will have a long service life.

Owing to the matching curvatures of the concave surface of the template 32 and the convex surface 12 of the substrate 10 and the intimate contact between these surfaces at the location of the cut-out portions in the template, it will be possible to avoid any "blurring" of the ultimate marking which would otherwise arise if the template concave surface had a higher curvature than the convex surface of the substrate.

According to an alternative embodiment the mask comprises highly flexible concave-convex template of reduced thickness, about 0.5 mm to 1 mm, made of a more flexible, transparent plastic material such as polycarbonate and deformable to enable the concave surface of the template to substantially mate relatively well with ophthalmic blanks having a series of different convex surface base curves. Accordingly, a relatively small number of templates having different but similar concave curvature or base curves may be adapted to a relatively large number of lens blanks having different convex surface base curves or curvatures. Such a template would be suitable for Rx laboratories which have relatively small throughputs. Finally the template and the ophthalmic blank may be mounted in a C-ring as described above for relative positioning and for subsequent mounting in a support such as a carousel for treatment with an ion beam from an ion source.

In the case of a template for single vision ophthalmic substrates the radius of curvature of the concave surface 32 of such a flexible template 31 is chosen to be at least equal to or preferably greater than the radius of curvature of the convex surface 12 of the range of substrates for which it is intended so that with cut-out portion(s) located in a central area but slightly offset from the geometric center of the corresponding surface of the template, the template will be substantially in mating contact with the opposed convex surface of each of the range of substrates thereby preventing "blurring" of the etched marking otherwise caused by a divergent trajectory of the ion beam passing through a space between the opposed surfaces of the template and the substrate. Such a template will have a long service life notwithstanding the flexing it may undergo when mounted on the lens blank to be treated.

In the case of a template for progressive addition lenses the radii of curvature of the concave surface of the template will be determined to closely match radii of curvature of the convex surface of the progressive addition lens blank with a minimum possible gap between the overlying surfaces to prevent "blurring" of the etched marking.

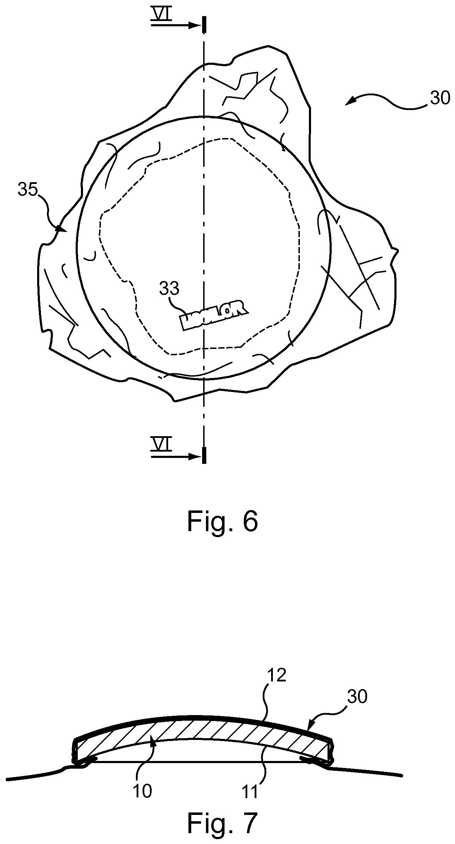

According to another embodiment as shown in Fig. 6 the mask comprises a mask 35 made of a metal foil such as tin foil which of course is impermeable to the ion beam. The cut-out portion(s) thereof 33 may be produced by stamping or punching. The foil mask is centred relative to the convex surface 12 of the ophthalmic blank and wrapped over the convex surface and the peripheral edge and tucked under the concave surface 11 of the blank to ensure the position of the cut-out portions of the foil mask relative to the blank during treatment with an ion beam. Such a foil mask 35 is suitable for custom lenses such as those that have a wearer-specific inter-pupillary distance, such as those sold under the PRECAL trademark of the assignee of the present application for which the cost of series manufacture of standardized templates may not be justified. Such a foil mask is reusable provided that it is carefully removed from a first lens blank after treatment in an ion beam.

In order to treat a plurality of ophthalmic substrates 10 at the same time with an ion source each of the ophthalmic substrates with its associated mask or template clipped together with a C-ring 40 may be introduced into the openings 51 in a conventional domed carousel 50 whereupon each C-ring is brought into engagement with the edge of the corresponding opening and held in place by the resilient engagement of a free end portion 45 of the C-ring with the opening in the carousel. Such a carousel support will typically allow 10 or more substrates, and in practice up to 250 substrates, to be etched with the ion beam at the same time.

Regardless of the type of mask or template employed, if the lens is provided with a temporary protection layer, portions thereof in alignment with the cut-out(s) in the mask or template are selectively mechanically removed for example by means of automatically or manually controlled rotating brushing or buffing device operative through the cut-out(s). Alternatively the temporary protection layer may be removed by ultrasound.

"Etching" with an ion source may be carried out in a conventional high vacuum evaporation installation or "box coater" with an ion gun which is conventionally used for ion pre-cleaning of ophthalmic substrates prior to deposition coating and for ion assisted deposition of coatings such as anti-reflection or AR coatings on the ophthalmic substrates. A Balzers® BAK 760 High Capacity High Vacuum Evaporation System manufactured by Leybold or a MC-380 Multiple Process Cleaning and Coating System manufactured by Satisloh AG, equipped with an ion gun and particular an end-Hall ion source, such as a Commonwealth Mark II ion gun, are suitable for marking or "etching" the outer coating layer of ophthalmic substrates having one or more conductive layers.

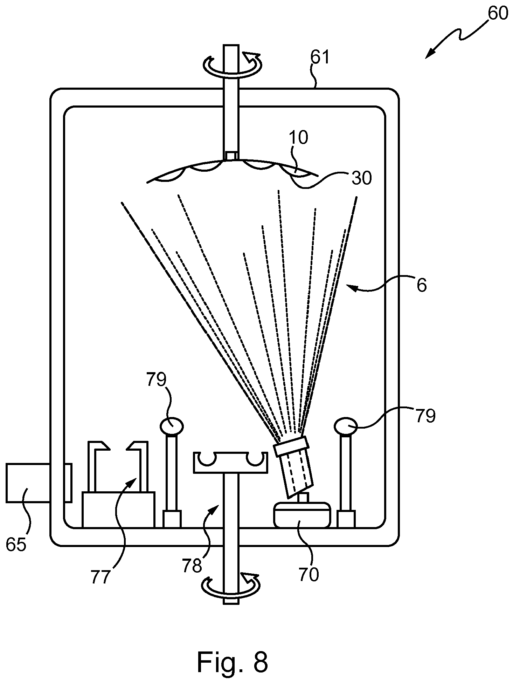

Fig. 8 schematically illustrates a high vacuum evaporation unit or box coater 60 suitable for performing ion pre-cleaning, or even evaporation deposition of coatings or coating layers for ophthalmic substrates and here for "etching" with the ion gun the outer coating layer of an ophthalmic substrate having one or more conductive layers.

The unit 60 comprises an enclosure or chamber 61 equipped with a conventional pumping unit 65 in communication with the interior of the chamber for pumping down the pressure inside the chamber to about 2x10-5 to 5x10-5 mbar. A neutral gas is supplied to the vacuum chamber through a gas intake conduit 66 communicating with a gas distributor plate 67 located below the ion gun 70 proper. An electromagnet 75 is mounted in the lower part of the vacuum chamber below the gas distributor 67 and an annular pole piece 77 is mounted proximate to the sidewall 62 of the vacuum chamber and extends inwardly therefrom so that a magnetic field is generated inside the ion gun, the magnetic field lines being designated by reference 76 extending generally between the electromagnet 75, which alternatively may be a permanent magnet, and the annular pole piece 77.

The ion gun 70 comprises an annular anode 80 disposed immediately above the gas distributor plate 67 and a cathode 81 carried by the annular pole piece 77 and extending perpendicularly to the axis of the ion gun. The cathode 81 may for example be a filament as illustrated or a filamentless cathode, that is, a hollow cathode electron source.

The end-Hall ion source operates as follows. The vacuum chamber is pumped down to a high vacuum for example 3x10-5 mbar. The cathode 81 produces electrons, identified by their negative charges (-). The electrons are attracted towards the anode 80 as illustrated by the arrows associated with the negative charges. The magnetic field between the electromagnet 75 and the annular pole 77 prevents the electrons from reaching the anode 80. The electrons are in effect "trapped" in the magnetic field lines 76.

Neutral gas atoms identified by their neutral charge (o), in practice argon atoms, are discharged uniformly through the gas distributor plate 67 and flow upwardly through apertures therein into the internal cavity of the annular anode 80 where they enter into collision with the trapped electrons thereby ionizing the neutral gas atoms into positively charged argon ions, identified by their positive charges (+), by ejecting one or more electrons from the argon atoms to form working ions. The working ions are accelerated away from the anode 80 toward the target which comprises the convex surfaces of the plurality of sets of templates 30 and substrates 10 fitted in the domed carousel 50 rotating about its axis as illustrated. In addition neutralizing electrons produced by an electron gun and controlled by a rotating electron shutter 78 are directed from one side into the ion beam (not shown) to balance the positive charge of the ions. Alternatively the neutralizing electrons may be produced by cathode 81. This produces a more consistent ion beam and avoids a charge building up on the target. After the short burst or bursts of ionized working gas bombards the targets sufficient to remove the exposed portions of the top coat through the masking template or other mask, the vacuum chamber is vented and the carousel taken out of the vacuum chamber and the pairs of templates and substrates with their clips are removed therefrom. Thereafter, substrates may be edged to the contour of a particular eyeglass frame into which they are to be mounted.

Note that the ion beam energy is controlled with the anode voltage. The beam ion energy is about 60 % of the anode voltage and a 200 V discharge voltage corresponds to a 120 V beam ion energy. The ion current or beam current controlled with the gas flow is about 20 % of the anode current, thus a 5A discharge current gas gives about a 1A ion current.

The ion-beam "etching" operation was carried out with an ion gun on coated ophthalmic substrates including at least one electrically conductive coating layer, such as described above, a Balzers® BAK 760 High Capacity High Vacuum Evaporation System and a MC-380 Multiple Process Cleaning and Coating System. The Balzers® BAK 760 system was operated with ion pre-cleaning (IPC) parameters using an argon gas and with the following settings: starting vacuum of 3.0x10-5 mbars, anode potential voltage of 100V, anode current of 1.00A, a neutralization current of 0.13A, for a duration of 5 to 10 seconds. The Satisloh MC-380 system was operated with ion pre-cleaning (IPC) parameters with an argon gas and the following settings: starting vacuum of 3.0x10-5 mbars, anode potential of 100V, anode current of 1.00A, a neutral current of 0.080A, for a duration of 15 to 20 seconds.

The resulting ion-gun etched substrates were examined under normal interior lighting conditions and the etched portions were not visible. The roughness of the markings could not be felt with one's finger tips in contrast to the smoothness of the rest of the convex surface of the substrate. When the convex surface of the substrate was fogged or misted, e.g. by exhaling, the desired markings were rendered visible by the contrast between dark toned condensate on the etched portions of the surface and the light toned micro-droplets around the etched portion. The presence of the electrically conductive layers had no detrimental effect to the bombardment of the ion beam to produce the desired markings. The sharpness of the fogged or misted marking was of the same quality as that achieved industrially with a corona discharge on an ophthalmic substrate without any conductive layers.

Such ion-source fog marked substrates can be edged in a conventional edge grinder. When the coated lens blank has a protection layer as described above having a thickness between about 5 nm and about 50 nm, and since the ion beam is a less energized source than known corona discharges for marking purposes, the protection layer needs to be partially or entirely eliminated (either avoided at the time of deposition of the protection layer or removed after deposition) in the zone overlying the portion of the ophthalmic substrate surface to be "etched" with the ion beam in order to produce the desired marking render visible by fogging or misting. Since the surface area of the temporary protection layer is removed by brushing or buffing relative to the entire surface area of the temporary protection layer, the reduction in adherence of the lens blank with the holding member will not compromise the effectiveness of the temporary protection layer during edging.

The present invention has been described for etching with an ion gun and in particular an end-Hall ion gun which is a gridless ion source. Other kinds of ion sources may be used and in particular gridded ion sources and in specifically gridded dc ion sources such as a KRI gridded dc ion source available from Kaufman & Robinson, Inc. Fort Collins, Colorado or one of the gridded dc ion sources available from Veeco Instruments, Plainview, N.Y.

Gridded dc ion sources may be of the hot filament type or the ions may be generated by an rf discharge which requires no electron emitting cathode. The discharge chamber is maintained at a positive potential by the beam supply and ions are accelerated through apertures in the screen and accelerator grids. Various grid configurations can be used but two-grid configurations are the most common. Gridded ion sources operate at background pressures of about 0.5 milliTorr or less. The ion current capacity of such an ion source is less than that of an end-Hall ion source.

A low temperature plasma may also be employed as an ion source. Commercial plasma etchers or plasma cleaners can be adopted and in particular the Femto low pressure plasma system available from Diener Electronic - North America, Reading, Penn.

Various embodiments of the present application have been described by way of example. It will be understood that the present invention admits of variations and modifications such as the number, composition and thickness of coatings and coating layers on one or both of the surfaces of the ophthalmic substrate, the underlying bulk material, the deposition or transfer method used for the application of the coating layers on the ophthalmic substrate, the structure and configuration of the mask defining the portions of the outer coating exposed to the ion beam, without departing from the scope of the appended claims.

## Claims

1. A method for marking an ophthalmic substrate or other ophthalmic article comprising the steps of
- providing an ophthalmic substrate of suitable organic or mineral glass having opposed optical surfaces;
- depositing a plurality of layers to define coatings on one or both of the opposed optical surface with anti-impact, anti-scratch, anti-reflection and/or anti-smudge properties, at least one of the layers being an electrically conductive layer;
- providing a mask defining a configuration complementary to the desired marking for one of the surface of the coated ophthalmic substrate and positioning the mask in the immediate proximity of the ophthalmic substrate surface; and
- providing an ion source and directing the ion beam produced by the ion source at the masked surface of the ophthalmic substrate to remove at least a portion of an outermost of said coating layers exposed through the mask thereby producing a desired marking on the substrate surface coating rendered visible by fogging.

2. The method according to claim 1, **characterized in that** the depositing step includes depositing a plurality of high and low index layers to define an anti-reflection coating and **characterized in that** the conductive layer comprises one or more of the high index layers of the anti-reflection coating and **in that** the conductive layer has anti-static properties.

3. The method according to any one of the preceding claims, **characterized in that** there are a plurality of spaced conductive layers conferring anti-static properties.

4. The method according to claim 2, **characterized in that** the one or more high index layers are made of indium-doped tin oxide.

5. The method according to any one of the preceding claims, **characterized in that** there are a plurality of conductive layers defining high index layers of an anti-reflection coating.

6. The method according to claim 2, **characterized in that** high and low index layers defining said anti-reflection coating are deposited by ion assisted deposition.

7. The method according to any one of the preceding claims, further comprising subjecting ophthalmic substrate to ion pre-cleaning (IPC) in a vacuum chamber prior to the step of depositing plurality of coating layers.

8. The method according to claim 7, **characterized in that** at least some of the coating layers including the one or more conductive layers are deposited on the pre-cleaned ophthalmic substrate by ion assisted deposition in the vacuum enclosure.

9. The method according to any one of the preceding claims, **characterized in that** the ion source produces a burst of charged ions for a duration of 5 to 30 seconds, or 5 to 10 seconds, or 15 to 20 seconds in order to eliminate selected portions of the outermost coating layer.

10. The method according to any one of the preceding claims, further comprising depositing in addition to the aforesaid plurality of coating layers a temporary protection layer, the protection layer being partially or entirely eliminated from a zone in alignment with the cut-out(s) in the mask to modify the surface energy of the portions exposed through the protection layer and the mask and thereby produce the desired marking rendered visible by fogging.

11. The method according to any one of the preceding claims, **characterized in that** the mask comprises a relatively rigid template having opposed convex and concave surfaces, the concave surface having the substantially same base curve as a convex surface of the substrate so that the portion of the concave surface of the mask comprising the cut-outs defining the marking is in mating contact with the portion of the convex surface of the substrate.

12. The method according to claim 11, **characterized in that** the template and substrate are retained in position relative to each other by a ring made of a resilient material, and **in that** the ring is adapted to mount and retain pairs of templates and substrates in apertures of a rotatable support mounted inside the enclosure during treatment with the ion beam.

13. The method according to any of claims 1 to 10, **characterized in that** the mask comprises a relatively flexible template having opposed convex and concave surfaces, the concave surface having a base curve with the same or lower curvature than that of a convex surface of a plurality of ophthalmic substrates having a range of base curves so that the portion of the concave surface of the mask comprising the cut-outs defining the marking(s) is in intimate overlying relation with the portion of the convex surface of the substrate.

14. The method according to claim 13, **characterized in that** the template and substrate are retained in position relative to each other by a ring made of a resilient material, and **in that** the ring is adapted to mount and retain pairs of templates and substrates in apertures of a rotatable support mounted inside the enclosure during treatment with the ion beam.

15. The method according to any one of claims 1 to 10, **characterized in that** the ophthalmic substrate has a convex surface having a special configuration and the mask comprises a metal foil with one or more cut-outs stamped therein and the mask is wrapped over the convex surface of an ophthalmic substrate.

16. The method according to any one of claims 1 to 10, **characterized in that** the ophthalmic substrate has a convex surface having a special configuration and the mask comprises a plastic film with one or more cut-outs stamped therein and the mask is applied over the convex surface of an ophthalmic substrate

17. The method according to any one of the preceding claims, **characterized in that** the ion source is selected from the group consisting of an ion gun, a gridded dc ion source and a low temperature plasma source.

18. The method according to any one of claims 1 to 16, **characterized in that** the ion source comprises an ion gun.

## Patentansprüche

1. Verfahren zum Markieren von ophthalmischem Substrat oder sonstigem ophthalmischem Gegenstand, umfassend die Schritte:
- Bereitstellen eines ophthalmischen Substrats aus geeignetem organischem oder Mineralglas mit gegenüber liegenden optischen Oberflächen;
- Abscheiden einer Vielzahl von Schichten, um Beschichtungen auf einer oder beiden der gegenüber liegenden optischen Oberfläche(n) mit Stoßfestigkeits-, Kratzfestigkeits-, Antireflexions- und/oder Antischmutzeigenschaften zu definieren, wobei mindestens eine der Schichten eine elektrisch leitfähige Schicht ist,
- Bereitstellen einer Maske, die eine Konfiguration definiert, die komplementär zu der gewünschten Markierung für eine der Oberfläche(n) des beschichteten ophthalmischen Substrats ist, und Positionieren der Maske in unmittelbarer Nähe zu der ophthalmischen Substratoberfläche; und
- Bereitstellen einer Ionenquelle und Lenken des durch die Ionenquelle produzierten Ionenstrahls auf die maskierte Oberfläche des ophthalmischen Substrats, um mindestens einen Anteil einer äußersten der Beschichtungsschichten zu entfernen, die durch die Maske hindurch exponiert werden, wodurch eine gewünschte Markierung auf der Substratoberflächenbeschichtung produziert wird, die durch Beschlagen sichtbar gemacht wird.

2. Verfahren nach Anspruch 1, **dadurch gekennzeichnet, dass** der Abscheideschritt Abscheiden einer Vielzahl von Schichten mit hohem und niedrigem Index einschließt, um eine Antireflexionsbeschichtung zu definieren, und **dadurch gekennzeichnet, dass** die leitfähige Schicht eine oder mehrere der Schichten mit hohem Index von der Antireflexionsbeschichtung umfasst, und dass die leitfähige Schicht Antistatikeigenschaften aufweist.

3. Verfahren nach einem der vorhergehenden Ansprüche, **dadurch gekennzeichnet, dass** eine Vielzahl von beabstandeten leitfähigen Schichten vorhanden ist, die Antistatikeigenschaften verleihen.

4. Verfahren nach Anspruch 2, **dadurch gekennzeichnet, dass** die eine oder mehreren Schichten mit hohem Index aus indiumdotiertem Zinnoxid gefertigt sind.

5. Verfahren nach einem der vorhergehenden Ansprüche, **dadurch gekennzeichnet, dass** eine Vielzahl von leitfähigen Schichten vorhanden ist, die Schichten mit hohem Index von einer Antireflexionsbeschichtung definieren.

6. Verfahren nach Anspruch 2, **dadurch gekennzeichnet, dass** Schichten mit hohem und niedrigem Index, die die Antireflexionsbeschichtung definieren, durch ionengestützte Abscheidung abgeschieden worden sind.

7. Verfahren nach einem der vorhergehenden Ansprüche, ferner umfassend Unterziehen des ophthalmischen Substrats Ionenvorreinigung (IPC) in einer Vakuumkammer vor dem Schritt des Abscheidens einer Vielzahl von Beschichtungsschichten.

8. Verfahren nach Anspruch 7, **dadurch gekennzeichnet, dass** mindestens einige der Beschichtungsschichten einschließlich der einen oder mehreren leitfähigen Schichten durch ionengestütztes Abscheiden in der Vakuumumhausung auf dem vorgereinigten ophthalmischen Substrat abgeschieden werden.

9. Verfahren nach einem der vorhergehenden Ansprüche, **dadurch gekennzeichnet, dass** die Ionenquelle einen Stoß geladener Ionen für eine Dauer von 5 bis 30 Sekunden oder 5 bis 10 Sekunden oder 15 bis 20 Sekunden produziert, um ausgewählte Anteile der äußersten Beschichtungsschicht zu eliminieren.

10. Verfahren nach einem der vorhergehenden Ansprüche, ferner umfassend Abscheiden einer temporären Schutzschicht zusätzlich zu der genannten Vielzahl von Beschichtungsschichten, wobei die Schutzschicht teilweise oder ganz aus einer Zone eliminiert wird, die mit der Aussparung/den Aussparungen in der Maske ausgerichtet ist, um die Oberflächenenergie der durch die Schutzschicht und die Maske hindurch exponierten Anteile zu modifizieren und dadurch die gewünschte Markierung zu produzieren, die durch Beschlagen sichtbar gemacht wird.

11. Verfahren nach einem der vorhergehenden Ansprüche, **dadurch gekennzeichnet, dass** die Maske eine relativ starre Schablone mit gegenüber liegenden konvexen und konkaven Oberflächen umfasst, wobei die konkave Oberfläche im Wesentlichen dieselbe Basiskurve wie eine konvexe Oberfläche des Substrats aufweist, so dass der Anteil der konkaven Oberfläche der Maske, welcher die Aussparungen umfasst, die die Markierung definieren, in paarigem Kontakt mit dem Anteil der konvexen Oberfläche des Substrats ist.

12. Verfahren nach Anspruch 11, **dadurch gekennzeichnet, dass** die Schablone und das Substrat durch einen Ring, der aus einem elastischen Material gefertigt ist, relativ zueinander in Position gehalten werden, und dass der Ring vorgesehen ist, um Paare von Schablonen und Substraten in Öffnungen eines drehbaren Trägers, der innerhalb der Umhausung montiert ist, zu montieren und während der Behandlung mit dem Ionenstrahl zu halten.

13. Verfahren nach einem der Ansprüche 1 bis 10, **dadurch gekennzeichnet, dass** die Maske eine relativ flexible Schablone mit gegenüber liegenden konvexen und konkaven Oberflächen umfasst, wobei die konkave Oberfläche eine Basiskurve mit derselben oder einer geringeren Krümmung als derjenigen einer konvexen Oberfläche von einer Vielzahl von ophthalmischen Substraten mit einem Bereich von Basiskurven aufweist, so dass der Anteil der konkaven Oberfläche der Maske, welcher die Aussparungen umfasst, die die Markierung(en) definieren, in inniger übereinander liegender Beziehung mit dem Anteil der konvexen Oberfläche des Substrats ist.

14. Verfahren nach Anspruch 13, **dadurch gekennzeichnet, dass** die Schablone und das Substrat durch einen Ring, der aus einem elastischen Material gefertigt ist, relativ zueinander in Position gehalten werden, und dass der Ring vorgesehen ist, um Paare von Schablonen und Substraten in Öffnungen eines drehbaren Trägers, der innerhalb der Umhausung montiert ist, zu montieren und während der Behandlung mit dem Ionenstrahl zu halten.

15. Verfahren nach einem der Ansprüche 1 bis 10, **dadurch gekennzeichnet, dass** das ophthalmische Substrat eine konvexe Oberfläche mit einer speziellen Ausgestaltung aufweist und die Maske eine Metallfolie mit einer oder mehreren darin eingeprägten Aussparungen aufweist, und die Maske über die konvexe Oberfläche eines ophthalmischen Substrats gehüllt ist.

16. Verfahren nach einem der Ansprüche 1 bis 10, **dadurch gekennzeichnet, dass** das ophthalmische Substrat eine konvexe Oberfläche mit einer speziellen Ausgestaltung aufweist und die Maske eine Kunststofffolie mit einer oder mehreren darin eingeprägten Aussparungen aufweist, und die Maske über der konvexen Oberfläche eines ophthalmischen Substrats aufgebracht ist.

17. Verfahren nach einem der vorhergehenden Ansprüche, **dadurch gekennzeichnet, dass** die Ionenquelle ausgewählt ist aus der Gruppe bestehend aus einer Ionenkanone, einer Gitter-Gleichstrom-Ionenquelle und einer Niedertemperatur-Plasmaquelle.

18. Verfahren nach einem der Ansprüche 1 bis 16, **dadurch gekennzeichnet, dass** die Ionenquelle eine Ionenkanone umfasst.

## Revendications

1. Procédé pour marquer un substrat ophtalmique ou un autre article ophtalmique comprenant les étapes consistant :
- à fournir un substrat ophtalmique en verre organique ou minéral approprié ayant des surfaces optiques opposées ;
- à déposer une pluralité de couches pour définir des revêtements sur l'une, ou sur l'une et l'autre, des surfaces optiques opposées ayant des propriétés anti-impacts, anti-rayures, antireflet et/ou antisalissures, au moins l'une des couches étant une couche électroconductrice ;
- à fournir un masque définissant une configuration complémentaire au marquage souhaité pour l'une des surfaces du substrat ophtalmique revêtu et à positionner le masque à proximité immédiate de la surface du substrat ophtalmique ; et
- à fournir une source d'ions et à diriger le faisceau d'ions produit par la source d'ions vers la surface masquée du substrat ophtalmique pour enlever au moins une partie d'une couche de revêtement la plus externe parmi lesdites couches de revêtement exposées à travers le masque, ce qui permet de produire un marquage souhaité sur le revêtement de surface de substrat rendu visible par embuage.

2. Procédé selon la revendication 1, **caractérisé en ce que** l'étape de dépôt consiste à déposer une pluralité de couche à indice élevé ou à faible indice pour définir un revêtement antireflet et **caractérisé en ce que** la couche conductrice comprend une ou plusieurs des couches à indice élevé du revêtement antireflet et **en ce que** la couche conductrice présente des propriétés antistatiques.

3. Procédé selon l'une quelconque des revendications précédentes, **caractérisé en ce qu'**il y a une pluralité de couches conductrices espacées conférant des propriétés antistatiques.

4. Procédé selon la revendication 2, **caractérisé en ce que** la ou les couches à indice élevé sont composées d'oxyde d'étain dopé à l'indium.

5. Procédé selon l'une quelconque des revendications précédentes, **caractérisé en ce qu'**il y a une pluralité de couches conductrices définissant des couches à indice élevé d'un revêtement antireflet.

6. Procédé selon la revendication 2, **caractérisé en ce que** des couches à indice élevé et à indice faible sont déposées par un dépôt assisté par ions.

7. Procédé selon l'une quelconque des revendications précédentes, consistant en outre à soumettre un substrat ophtalmique à un prénettoyage ionique (IPC) dans une chambre à vide avant l'étape de dépôt d'une pluralité de couches de revêtement.

8. Procédé selon la revendication 7, **caractérisé en ce qu'**au moins quelques-unes des couches de revêtement comprenant la ou les couches conductrices sont déposées sur le substrat ophtalmique prénettoyé par un dépôt assisté par ions dans l'enceinte sous vide.

9. Procédé selon l'une quelconque des revendications précédentes, **caractérisé en ce que** la source d'ions produit une rafale d'ions chargés pendant une durée allant de 5 à 30 secondes, ou de 5 à 10 secondes ou de 15 à 20 secondes afin d'éliminer des parties sélectionnées de la couche de revêtement la plus externe.

10. Procédé selon l'une quelconque des revendications précédentes, consistant en outre à déposer, en plus de la susdite pluralité de couches de revêtement, une couche de protection temporaire, la couche de protection étant partiellement ou entièrement éliminée d'une zone en alignement avec la ou les découpes dans le masque pour modifier l'énergie de surface des parties exposées à travers la couche de protection et le masque et, de ce fait, pour produire le marquage souhaité rendu visible par embuage.

11. Procédé selon l'une quelconque des revendications précédentes, **caractérisé en ce que** le masque comprend un gabarit relativement rigide ayant des surface convexe et concave opposées, la surface concave ayant la courbe de base sensiblement identique que celle d'une surface convexe du substrat de telle sorte que la partie de la surface concave du masque comprenant les découpes définissant le marquage soit en contact d'accouplement avec la partie de la surface convexe du substrat.

12. Procédé selon la revendication 11, **caractérisé en ce que** le gabarit et le substrat sont retenus en position l'un par rapport à l'autre par une bague composée d'un matériau élastique et **en ce que** la bague est conçue pour supporter et retenir des paires de gabarits et de substrats dans des orifices d'un support rotatif monté à l'intérieur de l'enceinte pendant un traitement avec le faisceau d'ions.

13. Procédé selon l'une quelconque des revendications 1 à 10, **caractérisé en ce que** le masque comprend un gabarit relativement souple ayant des surfaces convexe et concave opposées, la surface concave ayant une courbe de base ayant la même courbure ou une courbure plus petite que celle d'une surface convexe d'une pluralité de substrats ophtalmiques ayant une plage de courbes de base de telle sorte que la partie de la surface concave du masque comprenant les découpes définissant le ou les marquages soit en relation de superposition intime avec la partie de la surface convexe du substrat.

14. Procédé selon la revendication 13, **caractérisé en ce que** le gabarit et le substrat sont retenus en position l'un par rapport à l'autre par une bague composée d'un matériau élastique et **en ce que** la bague est conçue pour supporter et retenir des paires de gabarits et de substrats dans des orifices d'un support rotatif monté à l'intérieur de l'enceinte pendant un traitement avec le faisceau d'ions.

15. Procédé selon l'une quelconque des revendications 1 à 10, **caractérisé en ce que** le substrat ophtalmique comporte une surface convexe ayant une configuration spéciale et le masque comprend une feuille de métal dans laquelle une ou plusieurs découpes sont estampées, et le masque est enveloppé sur la surface convexe d'un substrat ophtalmique.

16. Procédé selon l'une quelconque des revendications 1 à 10, **caractérisé en ce que** le substrat ophtalmique comporte une surface convexe ayant une configuration spéciale et le masque comprend un film plastique dans lequel une ou plusieurs découpes sont estampées, et le masque est appliqué sur la surface convexe d'un substrat ophtalmique.

17. Procédé selon l'une quelconque des revendications précédentes, **caractérisé en ce que** la source d'ions est sélectionnée dans le groupe constitué par un canon ionique, une source d'ions CC en réseau et une source de plasma à basse température.

18. Procédé selon l'une quelconque des revendications 1 à 16, **caractérisé en ce que** la source d'ions est un canon ionique.
